# EUROPÄISCHE PATENTSCHRIFT

(11) **EP 1 525 379 B1**
(45) Veröffentlichungstag und Bekanntmachung des Hinweises auf die Patenterteilung: **07.06.2006**
(21) Anmeldenummer: 03766244.2
(22) Anmeldetag: 22.07.2003
(51) Int. Cl.: F02B 37/007

(54) **BRENNKRAFTMASCHINE MIT ABGASTURBOLADERN**
INTERNAL COMBUSTION ENGINE WITH WASTE GAS TURBO-CHARGERS
MOTEUR A COMBUSTION INTERNE COMPORTANT DES TURBOCOMPRESSEURS A GAZ D'ECHAPPEMENT

(30) Priorität: 26.07.2002 DE 10234040
(43) Veröffentlichungstag der Anmeldung: 27.04.2005
(73) Patentinhaber: MTU FRIEDRICHSHAFEN GMBH, 88040 Friedrichshafen (DE)
(72) Erfinder: BAUMANN, Hermann, 88069 Tettnang (DE)
(86) Internationale Anmeldenummer: PCT/EP2003/007953
(87) Internationale Veröffentlichungsnummer: WO 2004/013472

(56) Entgegenhaltungen:
- EP-A- 0 710 770
- DE-A- 3 101 623
- DE-A- 4 330 525
- US-A- 5 560 207
- US-A1- 2002 056 444

## Beschreibung

Die Erfindung betrifft eine Brennkraftmaschine mit Abgasturboladern nach dem Oberbegriff von Anspruch 1.

Bei Brennkraftmaschinen werden Abgasturbolader bekanntermaßen zur Leistungssteigerung verwendet. Die DE 195 24 566 C1 zeigt eine Brennkraftmaschine mit Abgasturboladern, welche in einem Trägergehäuse angeordnet sind. Hierbei befinden sich die Turbinen innerhalb des Trägergehäuses und die Verdichter außerhalb des Trägergehäuses. Über eine gemeinsame Abgas-Zuführung werden die Turbinen parallel mit Abgas beaufschlagt. Nachdem das Abgas die Turbinen durchströmt hat wird dieses in einem Sammelrohr - dargestellt ist ein Hosenrohr - zusammengefasst. Die Anordnung ist hierbei so gewählt, dass das Abgas von sich gegenüberliegenden Turbinen zusammengeführt wird. Hieraus resultiert eine große Baulänge des Sammelrohrs. Die Außenmaße des Trägergehäuses ergeben sich aus der Anzahl der verwendeten Abgasturbolader, deren Größe und der Abgas-Zuführung bzw. dem Sammelrohr.

In der Praxis wird das Trägergehäuse mit den Zu- und Abführungen auf der Oberseite der Brennkraftmaschine angebaut. Hierdurch vergrößert sich der Bauraum-Bedarf der Brennkraftmaschine. Bei Schiffen und militärischen Fahrzeugen ist eine Zunahme des Bauraum-Bedarfs problematisch.

Aus der EP 0 710 770 A1 ist eine Brennkraftmaschine mit einem Trägergehäuse und drei Abgasturboladern bekannt. Die Laderachsen der drei Abgasturbolader liegen in derselben Ebene. Der Abgasaustritt des ersten Turbinengehäuses ist verbunden mit dem Abgaseintritt des zweiten und dritten Turbinengehäuses. Der zweite und dritte Abgasturbolader sind symmetrisch auf gegenüberliegenden Seiten des ersten Abgasturboladers angeordnet, wobei ihre Laderachsen unter einem Winkel zueinander stehen. Über eine nach oben führend Abgasleitung strömt das Abgas nach Durchströmen des zweiten und dritten Abgasturboladers in eine Sammelleitung. Der Fundstelle ist ebenfalls zu entnehmen, dass die Verdichtergehäuse in jeden beliebigen Winkel in Bezug auf das Trägergehäuse ausgerichtet sein können.

Der Erfindung liegt die Aufgabe zu Grunde, eine Brennkraftmaschine mit drei Abgasturboladern, welche in einem Trägergehäuse angeordnet sind, mit kompakten Außenmaßen zu entwerfen.

Die Aufgabe wird durch die Merkmale von Anspruch 1 gelöst. In den Unteransprüchen sind die Ausgestaltungen dargestellt.

Ein erster und zweiter Abgasturbolader sind in der Art angeordnet, dass die beiden Laderachsen in einem Winkelbereich zwischen 55 bis 100 Grad zueinander stehen und in der gleichen Ebene liegen. Die Ebene erstreckt sich hierbei parallel zur Oberseite der Brennkraftmaschine. Die Anordnung bewirkt eine verwirbelungsarme Zusammenführung der Abgas-Volumina der beiden Abgasstränge nach den beiden Abgasturboladern. Als Vorteil ergibt sich gegenüber dem Stand der Technik ein kürzeres Sammelrohr.

Die Luft-Zuführungen von unverdichteter Luft zu den beiden Abgasturboladern ist über den Zylinderköpfen außenliegend angeordnet. Zusätzlich kann in Richtung der Kraftgegenseite ein Filter den Luft-Zuführungen vorgeschaltet werden. Über die Anordnung der Luft-Zuführungen verringert sich der Bauraum-Bedarf, d. h. die Brennkraftmaschine mit den Abgasturboladern besitzt kompaktere Außenmaße.

Beim innerhalb des Trägergehäuses angeordneten dritter Abgasturbolader liegt dessen Laderachse ebenfalls in der gleichen Ebene und liegt innerhalb des oben genannten Winkelbereichs. Gemäß der Erfindung ist der dritte Abgasturbolader mittig zwischen dem ersten und zweiten Abgasturbolader angeordnet wobei alle drei Abgasturbolader parallel vom Abgas durchströmt werden. Das Abgas dieses mittig angeordneten Abgasturboladers wird in das gemeinsame Sammelrohr geführt. Die Abgasstränge für den ersten und zweiten Abgasturbolader sind mit einer Abgasklappe zur Registerschaltung versehen. Die Luft-Zuführung zum dritten Abgasturbolader erfolgt über einen Abzweig aus den Luft-Zuführungen zu dem ersten bzw. zweiten Abgasturbolader. Indem der Abzweig jeweils stromab des Filters angeordnet wird, benötigt der dritte Abgasturbolader kein eigenes Filter. Hierdurch wird ebenfalls der Bauraum reduziert.

Die von den Abgasturboladern verdichtete Ladeluft wird in einer Ladeluft-Führung zusammengefasst, welche mittig im Zylinder-V angeordnet wird.

In den Zeichnungen ist ein Ausführungsbeispiel der Erfindung dargestellt, wobei identische Bauteile mit identischen Bezugszeichen versehen sind. Es zeigen:
- Figur 1: eine Brennkraftmaschine mit einem ersten und zweiten Abgasturbolader;
- Figur 2: eine Brennkraftmaschine mit drei Abgasturboladern.

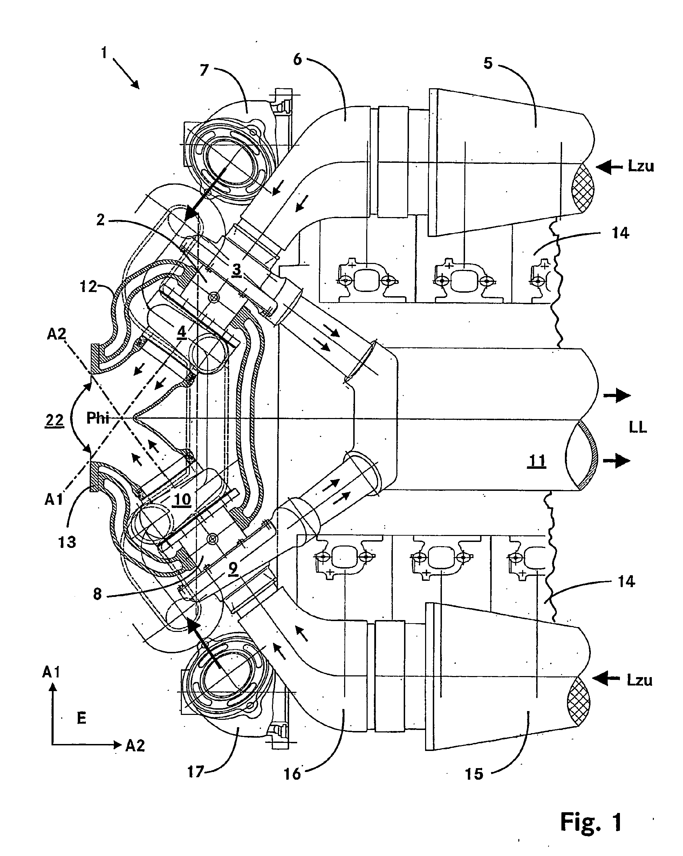

Figur 1 zeigt eine Brennkraftmaschine 1 mit einem ersten Abgasturbolader 2 und einem zweiten Abgasturbolader 8 mit Sicht auf die Oberseite. Die Funktionalität von Abgasturboladern wird im folgenden als bekannt vorausgesetzt.

Der erste Abgasturbolader 2 umfasst ein Verdichterrad 3 und ein mittels einer Welle gekoppeltes Turbinenrad 4. Die Rotationsachse des Verdichterrads 3 und Turbinenrads 4 ist in Figur 1 als Laderachse A1 bezeichnet. Über eine Luft-Zuführung 6 mit vorgeschaltetem Filter 5 wird unverdichtete Luft Lzu vom Verdichterrad 3 in eine Ladeluft-Führung 11 gefördert. Die Strömungsrichtung ist durch Pfeile gekennzeichnet. Die Luft-Zuführung 6 von unverdichteter Luft zum ersten Abgasturbolader 2 ist oberhalb der Zylinderköpfe 14 angeordnet. Über eine Abgas-Zuführung 7 wird dem Turbinenrad 4 des ersten Abgasturboladers 2 Abgas zugeführt. Nachdem dieses das Turbinenrad 4 zentripedal durchströmt hat, wird es in ein Sammelrohr 13 geführt.

Der zweite Abgasturbolader 8 umfasst ein Verdichterrad 9 und ein Turbinenrad 10. Die Rotationsachse des zweiten Abgasturboladers 8 ist in Figur 1 als Laderachse A2 bezeichnet. Über eine Luft-Zuführung 16 mit vorgeschaltetem Filter 15 wird dem Verdichterrad 9 unverdichtete Luft Lzu zugeführt. Die Luft-Zuführung 16 von unverdichteter Luft zum zweiten Abgasturbolader 8 ist oberhalb der Zylinderköpfe 14 angeordnet. Das Verdichterrad 9 fördert die Luft in die Ladeluft-Führung 11. Über eine Abgas-Zuführung 17 wird der Turbine 10 Abgas der Brennkraftmaschine 1 zugeführt. Nachdem das Abgas die Turbine 10 zentripedal durchströmt hat, wird es zusammen mit dem Abgas des ersten Abgasturboladers 2 im Sammelrohr 13 zusammengeführt.

Die beiden Abgasturbolader 2 und 8 sind in einem Trägergehäuse 12 angeordnet. Hierbei sind deren Turbinen 4 und 10 innerhalb des Trägergehäuses 12 und die Verdichterräder 3 und 9 außerhalb des Trägergehäuses 12 angeordnet. Innerhalb des Trägergehäuses 12 ist ebenfalls das Sammelrohr 13 angeordnet. Einer der beiden Abgasturbolader kann mit einer Abgasklappe zur Registeraufladung versehen sein. An das Sammelrohr 13 schließt sich - in Zeichnungsebene gesehen - nach links eine zentrale Abgas-Abführung 22 an. Der erste 2 und zweite Abgasturbolader 10 sind im Trägergehäuse 12 in der Art angeordnet, dass die beiden Laderachsen A1 und A2 in einem Winkelbereich zwischen 55 bis 100 Grad zueinander stehen und in der gleichen Ebene E liegen. Der Winkel ist in Figur 1 mit Phi bezeichnet. Aus der Anordnung ergibt sich eine verwirbelungsarme Zusammenführung der beiden Abgasströme bei gleichzeitig kurzer Baulänge des Sammelrohrs 13.

Aus der Figur 1 wird ersichtlich, dass die Laderachsen A1 und A2, die Abgas-Abführung 22 und die Luft-Zuführungen 6 und 16 in gleichen Ebenen liegen. Diese erstrecken sich parallel zur Oberseite der Brennkraftmaschine 1. Durch die Anordnung wird eine hohe Packungsdichte und somit ein kompakteres Außenmaß der Brennkraftmaschine 1 erzielt.

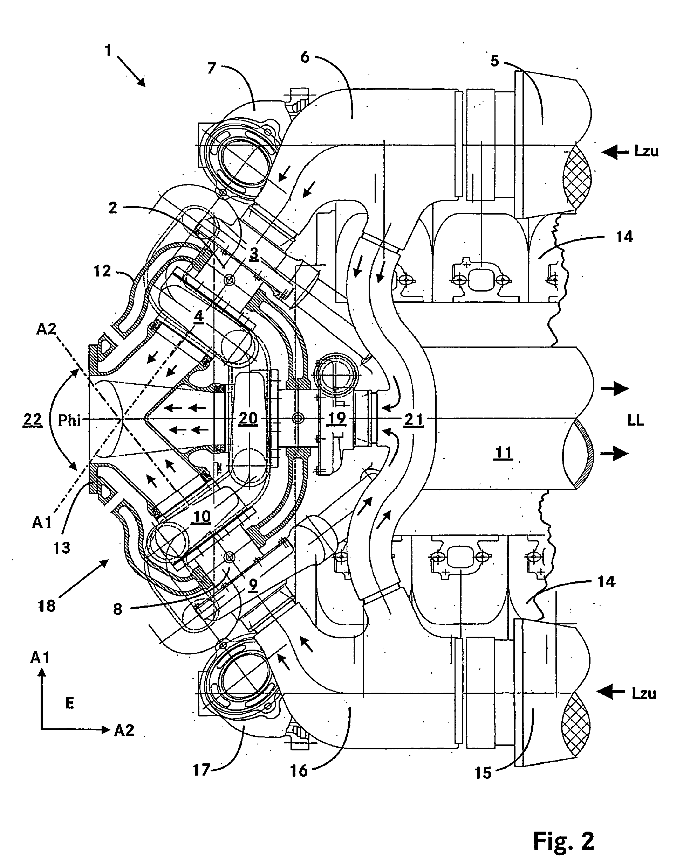

Figur 2 zeigt eine Brennkraftmaschine 1 bei der innerhalb des Trägergehäuses 12 zusätzlich ein dritter Abgasturbolader 18 angeordnet wird. Die Laderachse des dritten Abgasturboladers 18 liegt in der gleichen Ebene E wie die Laderachsen A1 und A2 des ersten 2 und zweiten Abgasturboladers 8. Die Laderachse des dritten Abgasturboladers 18 teilt den Winkel Phi in zwei gleiche Winkelbereiche, also beispielsweise 50 Grad. Dem Verdichterrad 19 des dritten Abgasturboladers 8 wird über einen Abzweig 21 aus der Luft-Zuführung 6 und der Luft-Zuführung 16 unverdichtete Luft zugeführt. Das den dritten Abgasturbolader 18 (Turbinenrad 20) durchströmende Abgas wird in das Sammelrohr 13 eingeleitet. Die vom Verdichterrad 19 geförderte Ladeluft wird der gemeinsamen Ladeluft-Führung 11 zugeführt. Diese ist mittig im Zylinder-V angeordnet.

Für die Erfindung ergeben sich folgende Vorteile:
- aus der innerhalb des Winkelbereichs und in der gleichen Ebene liegenden Anordnung der Abgasturbolader resultiert eine verwirbelungsarme Zusammenführung der Abgas-Volumina nach den beiden Abgasturboladern bei gleichzeitig kurzem Sammelrohr;
- aus der Anordnung der Abgasturbolader resultiert ein gegenüber dem Stand der Technik kleineres Trägergehäuse;
- durch die Anordnung der Luft-Zuführungen von unverdichteter Luft oberhalb der Zylinderköpfe ergibt sich eine höhere Packungsdichte und geringeres Außenmaß der Brennkraftmaschine;
- Brennkraftmaschinen innerhalb der gleichen Baureihe können bei geringerem Teile-Unterschied eine 2-Lader- oder 3-Lader-Anordnung aufweisen.

### Bezugszeichen

- 1: Brennkraftmaschine
- 2: erster Abgasturbolader
- 3: Verdichterrad
- 4: Turbinenrad
- 5: Filter
- 6: Luft-Zuführung
- 7: Abgas-Zuführung
- 8: zweiter Abgasturbolader
- 9: Verdichterrad
- 10: Turbinenrad
- 11: Ladeluft-Führung
- 12: Trägergehäuse
- 13: Sammelrohr
- 14: Zylinderkopf
- 15: Filter
- 16: Luft-Zuführung
- 17: Abgas-Zuführung
- 18: dritter Abgasturbolader
- 19: Verdichterrad
- 20: Turbinenrad
- 21: Abzweig
- 22: Abgas-Abführung

## Patentansprüche

1. Brennkraftmaschine (1) mit drei Abgasturboladern (2, 8, 18) zur Aufladung der Brennkraftmaschine (1), wobei jeder Abgasturbolader (2, 8, 18) ein Verdichterrad (3, 9, 19) sowie Turbinenrad (4, 10, 20) umfasst, welche um eine gemeinsame Laderachse (A1, A2) rotieren, und wobei die drei Abgasturbolader (2, 8, 18) in der Art angeordnet werden, dass deren Laderachsen in der gleichen Ebene (E) liegen und die beiden Laderachsen (A1, A2) des ersten (2) und zweiten Abgasturboladers (8) in einem Winkelbereich zwischen 55 bis 100 Grad (Phi) zueinander stehen sowie die Laderachse des dritten Abgasturbolader (18) innerhalb des Winkelbereichs (Phi) liegt, mit einer Abgas-Zuführung (7, 17) zum ersten (2) und zweiten Abgasturbolader (8), mit einem Trägergehäuse (12) zur Aufnahme der drei Abgasturbolader (2, 8, 18), mit einem Sammelrohr (13) zur Zusammenführung der Abgasströme nach dem ersten (2) und zweiten Abgasturbolader (8) und mit einer gemeinsamen Abgas-Abführung (22),
**dadurch gekennzeichnet, dass**
der dritte Abgasturbolader (18) mittig zwischen dem ersten (2) und zweiten Abgasturbolader (8) angeordnet ist, wobei alle drei Abgasturbolader (2, 8, 18) parallel vom Abgas durchströmt werden.

2. Brennkraftmaschine (1) nach Anspruch 1,
**dadurch gekennzeichnet, dass**
in den Luft-Zuführungen (6, 16) zur Zuführung von unverdichteter Luft zum ersten (2) und zweiten Abgasturbolader (8) ein Abzweig (21) zur Zufuhr von unverdichteter Luft zum dritten Abgasturbolader (18) angeordnet ist.

3. Brennkraftmaschine (1) nach Anspruch 1 oder 2,
**dadurch gekennzeichnet, dass**
im Sammelrohr (13) zwei Abgasklappen zur Deaktivierung des ersten (2) und zweiten Abgasturboladers (8) angeordnet sind.

4. Brennkraftmaschine (1) nach Anspruch 1,
**dadurch gekennzeichnet, dass**
die Ebene (E) sich parallel zur Oberseite der Brennkraftmaschine (1) erstreckt.

5. Brennkraftmaschine (1) nach Anspruch 1 und 4,
**dadurch gekennzeichnet, dass**
die Abgas-Abführung (22) ebenfalls in der Ebene (E) angeordnet ist.

6. Brennkraftmaschine (1) nach Anspruch 1,
**dadurch gekennzeichnet, dass**
die Luft-Zuführungen (6, 16) zur Zuführung von unverdichteter Luft zum ersten (2) und zweiten Abgasturbolader (8) oberhalb der Zylinderköpfe (14) angeordnet sind.

7. Brennkraftmaschine (1) nach Anspruch 6,
**dadurch gekennzeichnet, dass**
vor die Luft-Zuführungen (6, 16) in Richtung der Kraftgegenseite ein Filter (5, 15) vorgeschaltet ist.

8. Brennkraftmaschine (1) nach Anspruch 1,
**dadurch gekennzeichnet, dass**
das Abgas des dritten Abgasturboladers (18) in das gemeinsame Sammelrohr (13) geführt ist.

## Claims

1. Internal combustion engine (1) having three exhaust gas turbo chargers (2, 8, 18) for charging the internal combustion engine (1) each exhaust gas turbo charger (2, 8, 18) comprising a compressor wheel (3, 9, 19) and turbine wheel (4, 10, 20), which rotate about a common charger axis (A1, A2), and the three exhaust gas turbo chargers (2, 8, 18) being arranged in such a way that their charger axes lie in the same plane (E) and the two charger axes (A1, A2) of the first exhaust gas turbo charger (2) and of the second exhaust gas turbo charger (8) are positioned with respect to one another in an angular range between 55 to 100 degrees (Phi) and the charger axis of the third exhaust gas turbo charger (18) lies within the angular range (Phi), with an exhaust gas feed (7, 17) to the first exhaust gas turbo charger (2) and to the second exhaust gas turbo charger (8), having a carrier housing (12) for accommodating the three exhaust gas turbo chargers (2, 8, 18), having a collecting pipe (13) for collecting the exhaust gas flows downstream of the first exhaust gas turbo chargers (2) and of the second exhaust gas turbo charger (8), and having a common exhaust gas discharge (22), **characterized in that** the third exhaust gas turbo charger (18) is arranged centrally between the first exhaust gas turbo charger (2) and second exhaust gas turbo charger (8), the exhaust gas flowing through all three exhaust gas turbo chargers (2, 8, 18) in parallel.

2. Internal combustion engine (1) according to Claim 1, **characterized in that** a branch (21) for feeding non-compressed air to the third exhaust gas turbo charger (18) is arranged in the air feeds (6, 16) for feeding in non-compressed air to the first exhaust gas turbo charger (2) and to the second exhaust gas turbo charger (8).

3. Internal combustion engine (1) according to Claim 1 or 2, **characterized in that** two exhaust gas valves for deactivating the first exhaust gas turbo charger (2) and second exhaust gas turbo charger (8) are arranged in the collecting pipe (13).

4. Internal combustion engine (1) according to Claim 1, **characterized in that** the plane (E) extends parallel to the upper side of the internal combustion engine (1).

5. Internal combustion engine (1) according to Claims 1 and 4, **characterized in that** the exhaust gas discharge (22) is also arranged in the plane (E).

6. Internal combustion engine (1) according to Claim 1, **characterized in that** the air feeds (6, 16) for feeding in non-compressed air to the first exhaust gas turbo charger (2) and to the second exhaust gas turbo charger (8) are arranged above the cylinder heads (14).

7. Internal combustion engine (1) according to Claim 6, **characterized in that** a filter (5, 15) is connected upstream of the air feeds (6, 16) in the direction of the opposite side from the force.

8. Internal combustion engine (1) according to Claim 1, **characterized in that** the exhaust gas of the third exhaust gas turbo charger (18) is guided into the common collecting pipe (13).

## Revendications

1. Moteur à combustion interne (1) avec trois turbocompresseurs à gaz d'échappement (2, 8, 18) pour la suralimentation du moteur à combustion interne (1), où chaque turbocompresseur à gaz d'échappement (2, 8, 18) comprend une roue de compresseur (3, 9, 19) ainsi qu'une roue de turbine (4, 10, 20), lesquelles tournent autour d'un axe de turbocompresseur commun (A1, A2) et où les trois turbocompresseurs à gaz d'échappement (2, 8, 18) sont disposés de manière telle que leur axe de turbocompresseur se trouve dans le même plan (E) et que les deux axes de turbocompresseur (A1, A2) du premier (2) et du deuxième (8) turbocompresseur à gaz d'échappement forment entre eux un angle (Phi) compris entre 55 et 100 degrés, avec l'axe de turbocompresseur du troisième turbocompresseur à gaz d'échappement (18) se trouvant à l'intérieur de l'ouverture d'angle (Phi), avec une arrivée des gaz d'échappement (7, 17) au premier (2) et au deuxième (8) turbocompresseur à gaz d'échappement, avec un boîtier support (12) accueillant les trois turbocompresseurs à gaz d'échappement (2, 8, 18), avec un tuyau collecteur (13) afin d'amener en commun des gaz d'échappement vers le premier (2) et le deuxième (8) turbocompresseur à gaz d'échappement et avec une évacuation commune des gaz d'échappement (22), **caractérisé en ce que** le troisième turbocompresseur à gaz d'échappement (18) est disposé juste entre le premier (2) et le deuxième (8) turbocompresseur à gaz d'échappement, les trois turbocompresseurs à gaz d'échappement (2, 8, 18) étant parcourus en parallèle par les gaz d'échappement.

2. Moteur à combustion interne (1) selon la revendication 1, **caractérisé en ce que**, dans les arrivées d'air (6, 16) servant à amener l'air non comprimé au premier (2) et au deuxième (8) turbocompresseur à gaz d'échappement, on a placé une dérivation (21) servant à amener de l'air non comprimé au troisième turbocompresseur à gaz d'échappement (18).

3. Moteur à combustion interne (1) selon la revendication 1 ou 2, **caractérisé en ce que** deux clapets de gaz d'échappement sont disposés dans le tuyau collecteur (13) afin de désactiver le premier (2) et le deuxième (8) turbocompresseur à gaz d'échappement.

4. Moteur à combustion interne (1) selon la revendication 1, **caractérisé en ce que** le plan (E) s'étend parallèlement à la face supérieure du moteur à combustion interne (1).

5. Moteur à combustion interne (1) selon les revendications 1 et 4, **caractérisé en ce que** l'évacuation des gaz d'échappement (22) est également disposée dans le plan (E).

6. Moteur à combustion interne (1) selon la revendication 1, **caractérisé en ce que** les arrivées d'air (6, 16) servant à amener de l'air non comprimé au premier (2) et au deuxième (8) turbocompresseur à gaz d'échappement sont disposées au-dessus des culasses (14).

7. Moteur à combustion interne (1) selon la revendication 6, **caractérisé en ce qu'**un filtre (5, 15) est placé avant les arrivées d'air (6, 16) dans la direction opposée à la force motrice.

8. Moteur à combustion interne (1) selon la revendication 1, **caractérisé en ce que** les gaz d'échappement du troisième turbocompresseur à gaz d'échappement (18) sont amenés dans un tuyau collecteur commun (13).
